# EUROPÄISCHE PATENTSCHRIFT

(11) **EP 3 191 336 B1**
(45) Veröffentlichungstag und Bekanntmachung des Hinweises auf die Patenterteilung: **12.12.2018**
(21) Anmeldenummer: 15738021.3
(22) Anmeldetag: 08.07.2015
(51) Int. Cl.: B60L 3/00, B60L 11/18, H02J 5/00, H02J 7/02

(54) **VERFAHREN UND SYSTEM ZUR SICHERUNG EINES BERÜHRUNGSLOSEN LADE-/ENTLADEVORGANGS EINES BATTERIEBETRIEBENEN OBJEKTS, INSBESONDERE EINES ELEKTROFAHRZEUGS**
METHOD AND SYSTEM FOR PROTECTING A CONTACTLESS CHARGING/DISCHARGING PROCESS OF A BATTERY-OPERATED OBJECT, IN PARTICULAR AN ELECTRIC VEHICLE
PROCÉDÉ ET SYSTÈME DESTINÉS À SÉCURISER UN PROCESSUS DE CHARGE/DÉCHARGE SANS CONTACT D'UN OBJET ACTIONNÉ PAR BATTERIE, EN PARTICULIER D'UN VÉHICULE ÉLECTRIQUE

(30) Priorität: 08.09.2014 DE 102014217937
(43) Veröffentlichungstag der Anmeldung: 19.07.2017
(73) Patentinhaber: Robert Bosch GmbH, 70442 Stuttgart (DE)
(72) Erfinder: SGARZ, Heiko, 71229 Leonberg (DE); POHLMANN, Martin, 70567 Stuttgart (DE); MECKS, Joerg, 71717 Beilstein (DE); OETTLE, Gerald Heinrich, 73732 Esslingen (DE); MAYER, Markus, 74076 Heilbronn (DE)
(86) Internationale Anmeldenummer: PCT/EP2015/065597
(87) Internationale Veröffentlichungsnummer: WO 2016/037727

(56) Entgegenhaltungen:
- EP-A1- 2 717 430
- DE-A1-102009 033 236
- US-A1- 2013 249 682
- US-A1- 2014 203 629

## Beschreibung

### Stand der Technik

Die Erfindung betrifft ein Verfahren zur Sicherung eines berührungslosen Lade-/Entladevorgangs eines batteriebetriebenen Objekts, insbesondere eines Elektrofahrzeugs.

Darüber hinaus werden ein Computerprogramm und ein System angegeben, welche zur Durchführung des Verfahrens eingerichtet sind.

Batteriebetriebene Objekte, insbesondere Elektrofahrzeuge, benötigen für das Laden der Batterie ein Ladesystem. Das Ladesystem kann als ein konduktives Ladesystem ausgebildet sein, bei welchem das batteriebetriebene Objekt über ein Ladekabel mit der Lade-/Entladestation, verbunden wird.

Eine Alternative zu solchen konduktiven Ladesystemen bilden kontaktlose Ladesysteme, die dem Nutzer Vorteile bieten. Bei derartigen kontaktlosen oder berührungslosen Ladesystemen erfolgt eine induktive Energieübertragung zwischen einer ersten Spule einer Ladestation und einer zweiten Spule des Objekts, wobei die Bezeichnungen "erste" und "zweite" hier und im Folgenden willkürlich gewählt sind. Typischerweise befindet sich dabei zwischen dem Objekt und der Lade-/Entladestation ein Luftspalt, in welchem magnetische Wechselfelder mit relativ hohen magnetischen Flussdichten auftreten.

In derartigen Systemen besteht die Notwendigkeit, zu gewährleisten, dass Lebewesen, insbesondere Personen, während eines Lade-/Entladevorgangs nicht gefährdet werden.

Daher besteht eine Notwendigkeit, kritische Fremdobjekte in der Umgebung des Systems zu detektieren, worunter allgemein auch Lebewesen, insbesondere Personen verstanden werden.

Aus DE 10 2009 033 236 A1 ist eine Vorrichtung zur induktiven Übertragung der elektrischen Energie von einer stationären Einheit zu einem Elektrofahrzeug bekannt, wobei die stationäre Einheit oder das Elektrofahrzeug eine Einheit zur Detektion des Vorhandenseins eines Gegenstands innerhalb eines vorbestimmten Raums aufweist. Die Einrichtung zur Detektion kann Ultraschallradar, Infrarotsensoren oder elektronische Bildsensoren umfassen.

In einem IEEE-Artikel G. Ombach: Design and Safety Considerations of Wireless Charging System for Automotive; 2014 Ninth International Conference on Ecological Vehicles and Renewable Energies (EVER) werden Radarsysteme zur Detektion von Lebewesen beschrieben, wobei eine Detektion von Bewegungen unterhalb des Fahrzeugs erfolgt.

### Offenbarung der Erfindung

Bei einem erfindungsgemäßen Verfahren zur Sicherung eines berührungslosen Lade-/Entladevorgangs eines batteriebetriebenen Objekts, insbesondere eines Elektrofahrzeugs, wobei das Laden oder Entladen des batteriebetriebenen Objekts über eine induktive Energieübertragung zwischen einer ersten Spule einer Lade-/Entladestation und einer zweiten Spule des batteriebetriebenen Objekts erfolgt, ist vorgesehen, dass anhand von Eingangsinformationen ein Schutzbereich in der Umgebung der Lade-/Entladestation festgelegt wird, ein Erfassungsbereich oder ein Auswertebereich von Überwachungssensoren auf den Schutzbereich eingestellt wird und dass während des berührungslosen Ladens oder Entladens des batteriebetriebenen Objekts eine Überwachung auf Vorhandensein von Metall und/oder Personen im Erfassungsbereich oder Auswertebereich der Überwachungssensoren erfolgt.

Mit den Maßnahmen der Erfindung wird zunächst ein Schutzbereich in der Umgebung der Lade-/Entladestation, d. h. ein räumlicher Schutzbereich festgelegt. Im Gegensatz zu einer Vorrichtung, bei welcher der Schutzbereich nicht anhand von Eingangsinformationen sondern ausschließlich durch die Sensorleistung bestimmt wird, bei welcher also stets ein möglichst großer, d. h. maximaler Schutzbereich überwacht wird, kann mit den Maßnahmen der Erfindung eine Fehlauslöserate des Systems vermindert werden, da es möglich ist, nur noch Ereignisse zu detektieren oder auszuwerten, die für das Lade-/Entladesystem bzw. für Personen in der Nähe des Lade-/Entladesystems kritisch sind.

Als Lade-/Entladestation wird im Rahmen der Erfindung eine Station verstanden, welche sowohl ausschließlich zur Ladung als auch ausschließlich zur Entladung des batteriebetriebenen Objekts eingerichtet sein kann. Insbesondere werden von dem Begriff aber auch solche Stationen umfasst, welche sowohl zur Ladung als auch zur Entladung eingerichtet sind. Beispielsweise kann vorgesehen sein, dass je nach Zustand des batteriebetriebenen Objekts zunächst eine vollständige Entladung und darauf folgend eine Ladung erfolgt. Die Erfindung ist nicht abhängig von derartigen Lade-/Entladestrategien.

In einem Schritt wird der Erfassungsbereich von Überwachungssensoren oder der Auswertebereich von Überwachungssensoren auf den Schutzbereich eingestellt. Für den Fall, dass der Auswertebereich von Überwachungssensoren auf den Schutzbereich eingestellt wird, werden beispielsweise Ortsinformationen über ein Fremdobjekt ermittelt und anhand der Ortsinformationen bestimmt, ob sich das Fremdobjekt innerhalb oder außerhalb des Schutzbereichs befindet. Stehen also Sensorsignale zur Verfügung, die eine Distanzinformation über das Objekt enthalten, so kann anhand des definierten Schwellenwerts der Schutzbereich eingestellt werden. Falls sich Fremdobjekte in einer Distanz zur Lade-/Entladestation befinden, welche größer als der Schwellenwert ist, wird keine Reaktion ausgelöst.

In einem Schritt wird die Anwesenheit von Metall und/oder Personen überwacht, was im Rahmen der vorliegenden Offenbarung auch als Fremdobjekterkennung, insbesondere Metallerkennung oder Lebewesenerkennung, bezeichnet wird. Die Metallerkennung erfolgt beispielsweise durch induktive Metallsensoren. Die Lebewesenerkennung erfolgt beispielsweise durch Erkennen von Bewegungen oder durch Detektion von Parametern und Eigenschaften von Lebewesen wie Wärme, Wassergehalt des Körpers, Reflexionseigenschaften des Lichtes an Lebewesen oder Ähnliches.

Gemäß einer Ausführungsform der Erfindung wird der Schutzbereich während eines Lade-/Entladevorgangs anhand von Eingangsinformationen dynamisch festgelegt. Als dynamische Festlegung des Schutzbereichs wird bezeichnet, wenn der Schutzbereich kontinuierlich oder in regelmäßigen zeitlichen Abständen während des Lade-/Entladevorgangs auf Basis von Eingangsinformationen angepasst wird. Die Eingangsinformationen werden dabei von Sensoren zur Erfassung einer Lade-/Entladeleistung, einer Kopplungsgüte, eines Lateralversatzes zwischen Objekt und Lade-/Entladestation, einer Größe eines Luftspalts zwischen Objekt und Lade-/Entladestation und/oder zur Erfassung einer magnetischen Flussdichte in der Lade-/Entladestation erfasst.

Eine dynamische Festlegung des Schutzbereichs kann beispielsweise auf Basis einer ermittelten Lade-/Entladeleistung erfolgen, wobei diese sowohl auf Seiten der Lade-/Entladestation als auch auf Seiten des batteriebetriebenen Objekts ermittelt werden kann.

Alternativ hierzu oder zusätzlich hierzu kann der Schutzbereich dynamisch anhand einer ermittelten Kopplungsgüte der Spulen bestimmt werden, wobei die Kopplungsgüte typischerweise mit der Lade-/Entladeleistung in Zusammenhang steht.

Alternativ hierzu oder zusätzlich hierzu kann der Schutzbereich während des Lade-/Entladevorgangs dynamisch anhand eines ermittelten Abstands des Objekts zur Lade-/Entladestation, insbesondere anhand der Größe eines Lateralversatzes und/oder der Größe eines Luftspaltes zwischen dem Objekt und der Lade-/Entladestation bestimmt werden. Zur Messung des Abstands des Objekts zur Lade-/Entladestation können beispielsweise GPS, Indoor-GPS, aber auch Ultraschallsensoren, Radar-, Lidar- oder Videosensoren eingesetzt werden. Die Messung der Größe des Luftspalts kann insbesondere durch Ermittlung der Signallaufzeit eines Ultraschallsignals erfolgen.

Alternativ hierzu oder zusätzlich hierzu kann der Schutzbereich während des Lade-/Entladevorgangs dynamisch anhand der Messung einer magnetischen Flussdichte in der Lade-/Entladestation festgelegt werden. Die Messung der magnetischen Flussdichte kann dabei über externe Sensoren, beispielsweise Magnetfeldsensoren, in der Lade-/Entladestation oder in dem batteriebetriebenen Objekt oder im Außenbereich des Systems, also außerhalb der Lade-/Entladestation, erfolgen. Als Magnetfeldsensoren eignen sich insbesondere Hall-Sensoren.

In einer alternativen Ausführungsform kann der Schutzbereich vor dem Lade-/Entladevorgang anhand von Eingangsinformationen einmalig festgelegt werden. Dies erfolgt bevorzugt anhand von Eigenschaften des batteriebetriebenen Objekts, beispielsweise anhand einer definierten Nominal-Lade-/Entladeleistung, welche beispielsweise in Höhe von 22 kW, 7 kW oder 3,5 kW festgelegt sein kann, und/oder unter Ermittlung der Auswirkung der Objektgröße auf den Abstand von der Lade-/Entladestation zu dem Objekt. Im Falle von Elektrofahrzeugen bieten sich Fahrzeugparameter an. Derartige Fahrzeugparameter können beispielsweise durch Fahrzeugklassen (z. B. Kleinwagen, SUV), Fahrzeuggrößen und Fahrzeugkonturen definiert werden.

Nach einer Ausführungsform der Erfindung ist der Schutzbereich in diskreten Schritten einstellbar. Dies kann zu einer besonders kostengünstigen Umsetzung der Erfindung führen. Dabei können Systeme vorgesehen sein, welche auf exakt zwei, drei oder vier Schutzbereiche hin entwickelt sind, insbesondere beispielsweise auf einen ersten Modus, in dem ein Nahbereich überwacht wird und einen zweiten Modus, in dem ein Nah- und Fernbereich überwacht wird. Sobald die Schutzbereiche aufgrund unterschiedlicher magnetischer Streufelder des Lade-/Entladesystems oder aufgrund des Abstands der Lade-/Entladestation zu dem Objekt variieren, ändert sich der zu überwachende Schutzbereich.

Nach einer Ausführungsform wird der Erfassungsbereich der Überwachungssensoren durch Einstellen einer Sendeleistung eingestellt. Insbesondere bei einem System, welches auf Radarsensoren basiert, ist der Erfassungsbereich des Sensors über die Sendeleistung regelbar. Für eine höhere Reichweite wird die Sendeleistung erhöht und für eine geringere Reichweite die Sendeleistung reduziert. Alternativ kann die Sensitivität über andere sensorspezifische Parameter geändert werden.

Nach einer bevorzugten Ausführungsform werden als eine weitere Eingangsgröße bei der Einstellung der Sendeleistung der Überwachungssensoren Störeinflüsse berücksichtigt, zum Beispiel ein Wasserfilm auf einem Sensor, welcher die Reichweite des Sensors einschränkt oder anderweitige Verschmutzung. Hierbei werden beispielsweise in einem ersten Schritt die Umwelteinflüsse detektiert und in einem zweiten Schritt anhand der ermittelten Störeinflüsse und des festgelegten Schutzbereichs die Sendeleistung der Überwachungssensoren eingestellt.

Nach einer bevorzugten Ausführungsform erfolgen bei einer detektierten Anwesenheit von Metall und/oder Personen im Erfassungsbereich oder Auswertebereich der Überwachungssensoren eine Reaktion in Form einer Abschaltung des Lade-/Entladevorgangs, einer zeitweiligen oder bedingten Unterbrechung des Lade-/Entladevorgangs, einer Reduzierung der Lade-/Entladeleistung des Lade-/Entladevorgangs, einer Abgabe eines entsprechenden Ausgangssignals, das von weiteren Steuergeräten weiterverarbeitet werden kann, und/oder einer Ausgabe eines visuellen oder akustischen Warnsignals. Eine bedingte Unterbrechung kann unter der eintretenden Bedingung wieder aufgehoben werden, dass das detektierte Metallstück oder die betreffende Person wieder aus dem Erfassungsbereich oder Auswertebereich der Überwachungssensoren heraus tritt.

Die Informationen über die detektierte Anwesenheit von Metall und/oder Personen im Erfassungsbereich oder Auswertebereich der Überwachungssensoren können beispielsweise an ein Steuergerät übermittelt werden, welches sowohl auf Seiten des batteriebetriebenen Objekts als auch auf Seiten der Lade-/Entladestation vorgesehen sein kann. Das Steuergerät führt die Reaktion des Gesamtsystems durch. Dabei können Pflichtreaktionen vorgesehen sein, wie beispielsweise bei einer Metallerkennung oder bei einer Erkennung von Lebewesen im Schutzbereich die Leistungsübertragung abzuschalten, und optionale Zusatzreaktionen, wie beispielsweise die Leistung zu reduzieren, wenn sich ein Lebewesen lediglich annähert.

Nach einem weiteren Aspekt wird ein Computerprogramm vorgeschlagen, gemäß dem eines der hierin beschriebenen Verfahren durchgeführt wird, wobei das Computerprogramm auf einer programmierbaren Computereinrichtung ausgeführt wird. Bei dem Computerprogramm kann es sich beispielsweise um ein Software-Modul, eine Softwareroutine oder eine Software-Subroutine zur Implementierung eines Lade-/Entladesystems mit einem batteriebetriebenen Objekt und einer Lade-/Entladestation handeln. Das Computerprogramm kann auf dem batteriebetriebenen Objekt, auf der Lade-/Entladestation oder auf diesen verteilt gespeichert sein, insbesondere auf permanenten oder wiederbeschreibbaren maschinenlesbaren Speichermedien oder in Zuordnung zu einer Computereinrichtung, beispielsweise auf einem tragbaren Speicher wie einer CD-ROM, DVD, Blu-ray-Disc, einem USB-Stick oder einer Speicherkarte. Zusätzlich oder alternativ dazu kann das Computerprogramm auf einer Computereinrichtung wie etwa auf einem Server oder einem Cloudserver zum Herunterladen bereitgestellt werden, beispielsweise über ein Datennetzwerk wie das Internet oder über eine Kommunikationsverbindung wie eine Telefonleitung oder eine Drahtlosverbindung.

Gemäß einem weiteren Aspekt der Erfindung wird ein System mit einer Lade-/Entladestation und mit einem batteriebetriebenen Objekt, insbesondere einem Elektrofahrzeug, angegeben, wobei die Lade-/Entladestation und das batteriebetriebene Objekt zum Laden und/oder Entladen Spulen aufweisen. Das System umfasst außerdem Überwachungssensoren zur Erfassung des Vorhandenseins von Metall und/oder Personen in einer Umgebung der Lade-/Entladestation. Das System umfasst außerdem ein Steuergerät, welches eingerichtet ist, einen Schutzbereich in der Umgebung der Lade-/Entladestation anhand von Eingangsinformationen festzulegen, einen Erfassungsbereich oder einen Auswertebereich der Überwachungssensoren auf den Schutzbereich einzustellen und während eines Lade-/Entladevorgangs des batteriebetriebenen Objekts ein Vorhandensein von Metall und/oder Personen im Erfassungsbereich oder Auswertebereich der Überwachungssensoren zu überwachen.

Bevorzugt ist das System zur Durchführung der beschriebenen Verfahren ausgebildet und/oder eingerichtet. Dementsprechend gelten die im Rahmen der Verfahren beschriebenen Merkmale entsprechend für das System und umgekehrt die im Rahmen des Systems beschriebenen Merkmale entsprechend für die Verfahren.

Das Steuergerät kann der Lade-/Entladestation oder dem batteriebetriebenen Objekt zugeordnet sein. Alternativ kann vorgesehen sein, dass sowohl das batteriebetriebene Objekt als auch die Lade-/Entladestation mit Steuergeräten ausgestattet sind, welche gemeinsam das erfindungsgemäße Verfahren durchführen.

Gemäß weiteren Aspekten der Erfindung werden eine Lade-/Entladestation, sowie ein batteriebetriebenes Objekt zur Verwendung in einem derartigen System bereitgestellt.

Die Begriffe "Batterie" und "batteriebetrieben" werden in der vorliegenden Beschreibung dem üblichen Sprachgebrauch angepasst für Akkumulator bzw. akkumulatorbetrieben verwendet. In der Batterie sind die Batteriezellen vorzugsweise räumlich zusammengefasst und schaltungstechnisch miteinander verbunden, beispielsweise seriell oder parallel zu Modulen verschaltet, um die geforderten Leistungsdaten mit den Batteriezellen bereitstellen zu können.

Insbesondere kann das batteriebetriebene Objekt ein Kraftfahrzeug sein, wobei dessen Batterie mit einem Antriebssystem des Kraftfahrzeugs verbunden ist. Das Kraftfahrzeug kann als reines Elektrofahrzeug ausgestaltet sein und ausschließlich ein elektrisches Antriebssystem umfassen. Alternativ kann das Kraftfahrzeug als Hybridfahrzeug ausgestaltet sein, das ein elektrisches Antriebssystem und einen Verbrennungsmotor umfasst. In einigen Varianten kann vorgesehen sein, dass das Hybridfahrzeug extern aufladbar ist (*PHEV, plug-in hybrid electric vehicle*).

Die Überwachungssensoren umfassen bevorzugt Radarsensoren, Infrarotsensoren, Ultraschallsensoren, ein Videosystem und/oder induktive Metallerkennungssensoren. Weiterhin können Wärmesensoren vorgesehen sein, welche die Erhitzung der Metallstücke feststellen können. Die Anpassung der Überwachungsbereiche kann demnach sowohl für die Lebewesenerkennung angewendet werden als auch für die induktive Metallerkennung.

Bevorzugt sind dabei Ultrabreitband-Radarsensoren mit einer Frequenzbandbreite von mindestens 500 MHz, bevorzugt mindestens 1 GHz. Derartige Bandbreiten erlauben eine bessere Trennfähigkeit und eine Mehrzielauflösung von Objekten. Bevorzugt sind außerdem Radarsensoren mit einem Frequenzbereich von 2 bis 24 GHz, bevorzugt von 3,1 bis 4,8 GHz oder von 6 bis 8,5 GHz. Alternativ sind Radarsensoren mit einem Frequenzbereich von 76 bis 81 GHz besonders bevorzugt. Bei diesen höheren Frequenzen können prinzipiell kleinere Antennen genutzt werden, was einen kleineren Bauraum des Sensors zur Folge haben kann. Eine höhere Trägerfrequenz ermöglicht auch eine bessere Dopplerauflösung, die für eine höhere Genauigkeit bei Messung von Geschwindigkeit und Abstand genutzt werden kann.

### Vorteile der Erfindung

Durch die vorliegende Erfindung wird ein Verfahren zur einmaligen oder dynamischen Anpassung von Schutzbereichen bei kontaktlosen Lade-/Entladesystemen bereitgestellt. Das vorgestellte System erlaubt sowohl eine Objekterkennung, speziell eine Metallerkennung, und eine Lebewesenerkennung.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: eine Seitenansicht auf ein System mit einem batteriebetriebenen Objekt und einer Lade-/Entladestation gemäß einer Ausführungsform der Erfindung und
- Figur 2: eine Draufsicht auf das System aus Figur 1.

### Ausführungsformen der Erfindung

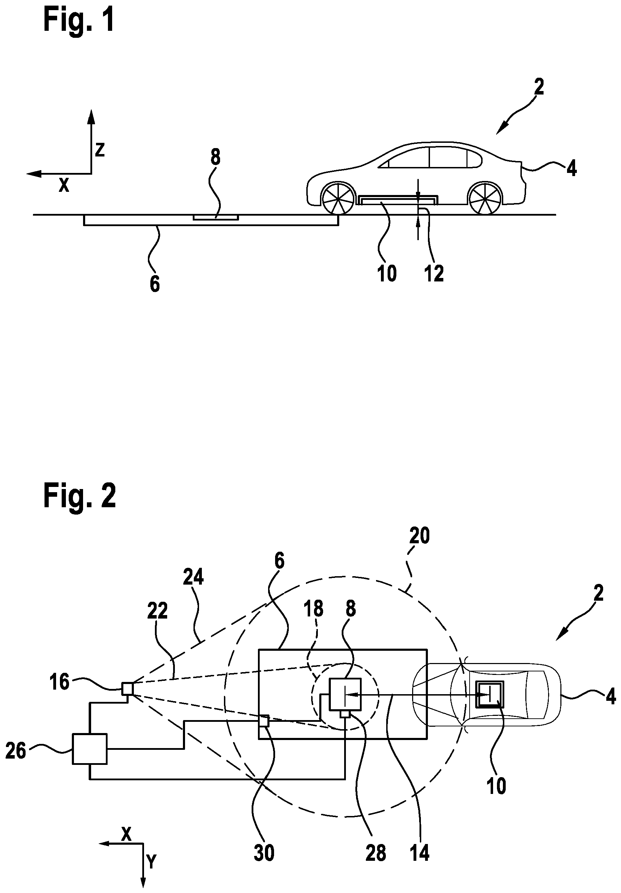

Figur 1 zeigt ein System 2 mit einem batteriebetriebenen Objekt 4 und einer Lade-/Entladestation 6. Das batteriebetriebene Objekt 4, hier beispielhaft ein Elektrofahrzeug, wird im Folgenden auch kurz als Objekt 4 bezeichnet.

Die Lade-/Entladestation 6 weist eine erste Spule 8 auf. Das Objekt 4 weist eine zweite Spule 10 auf. Die ersten und zweiten Spulen 8, 10 können jeweils auch durch mehrere miteinander kombinierte einzelne Spulen 8, 10, d. h. durch ein Spulensystem gebildet sein. Über die Spulen 8, 10 erfolgt ein Laden und/oder ein Entladen des Objekts 4 mittels induktiver Energieübertragung.

Beim berührungslosen Lade- oder Entladevorgang existiert typischerweise ein Luftspalt 12 zwischen dem Objekt 4 und der Lade-/Entladestation 6, dessen Größe eine Kopplungsgüte der Spulen 8, 10 beeinflusst. Zum Laden wird das Objekt 4 mit seiner zweiten Spule 10 daher möglichst genau über die erste Spule 8 der Lade-/Entladestation 6 positioniert, um die Kopplung zu maximieren.

Figur 2 zeigt das System 2 aus Figur 1 in Draufsicht, wobei hier außerdem ein Überwachungssensor 16, ein Steuergerät 26 und ein Eingangsinformationssensor 28 dargestellt sind, welche dem System 2 zugeordnet sind. In Figur 2 sind der Überwachungssensor 16, das Steuergerät 26 und der Eingangsinformationssensor 28 außerhalb vom Fahrzeug abgebildet. Dies ist für die Erfindung nicht beschränkend. Der Überwachungssensor 16, das Steuergerät 26 und/oder der Eingangsinformationssensor 28 kann alternativ auch dem Objekt 4 zugeordnet sein, beispielsweise als eine Sensorik am Fahrzeugunterboden. Alternativ kann eine Integration in ein Ladepad auf der Infrastrukturseite vorgesehen sein.

Das Objekt 4 ist in einem Lateralversatz 14 zur Lade-/Entladestation 6 angeordnet. Der Lateralversatz 14 ist ebenso wie der Luftspalt 12 ein Parameter, welcher die Kopplungsgüte der Spulen 8, 10 beeinflusst. Der Lateralversatz 14 kann bezüglich beliebiger Parameter des Objekts 4 und der Lade-/Entladestation 6 definiert sein, insbesondere auch bezüglich der Spulen 8, 10. Beispielsweise kann ein Lateralversatz 14 von Null angenommen werden, wenn die zweite Spule 10 direkt über der ersten Spule 8 angeordnet ist.

Das System 2 umfasst Überwachungssensoren 16, wobei hier beispielhaft lediglich ein Überwachungssensor 16 dargestellt ist. Im Allgemeinen ist eine Vielzahl von Überwachungssensoren 16 vorgesehen, um die Umgebung des batteriebetriebenen Objekts 4 und der Lade-/Entladestation 6 detailliert zu erfassen. Die Überwachungssensoren 16 können Ultraschallsensoren, Radarsensoren, Infrarotsensoren, ein Videosystem und Metallerkennungssensoren umfassen, beispielsweise Ultrabreitbandradarsensoren.

Das System 2 umfasst einen ersten Schutzbereich 18 und einen zweiten Schutzbereich 20, welche als Räume mit einem einheitlichen Abstand zur Lade-/Entladestation 6 bzw. zur ersten Spule 8 dargestellt sind. Die Schutzbereiche 18, 20 können sich in nicht dargestellten Ausführungsformen auch auf eine Umgebung der zweiten Spule 10 des Objekts 4 beziehen oder auf eine gemeinsame Umgebung der ersten Spule 8 und der zweiten Spule 10. Im letzteren Fall können die Schutzbereiche 18, 20 beispielsweise als Räume definiert werden, welche durch einen konstanten summierten Abstand zu den beiden Spulen 8, 10 begrenzt sind, d. h. durch Ellipsoide.

Dem ersten Schutzbereich 18 ist ein erster Erfassungsbereich 22 des Überwachungssensors 16 zugeordnet. Dem zweiten Schutzbereich 20 ist ein zweiter Erfassungsbereich 24 des Überwachungssensors 16 zugeordnet, welcher größer als der erste Erfassungsbereich 22 ist. Die Größe der Erfassungsbereiche 22, 24 des Überwachungssensors 16 lässt sich beispielsweise durch Regelung der Sendeleistung einstellen. Alternativ kann ein Auswertebereich des Erfassungsbereichs 22, 24 festgelegt werden.

Zur Festlegung des Erfassungsbereichs 22, 24 wird der Überwachungssensor 16 vom Steuergerät 26 angesteuert. Als Eingangsgröße der Ansteuerung, d. h. sozusagen als Entscheidungsgrundlage, verarbeitet das Steuergerät 26 Daten und/oder Messwerte des Eingangsinformationssensors 28. Dabei ist im Allgemeinen vorgesehen, dass mehr als ein Eingangsinformationssensor 28 verwendet wird, auch wenn in der Figur 2 nur ein Eingangsinformationssensor 28 dargestellt ist. Die Eingangsinformationssensoren 28 können beispielsweise Sensoren zur Erfassung der Lade-/Entladeleistung, der Kopplungsgüte, des Lateralversatzes 14 zwischen Objekt 4 und Lade-/Entladestation 6, zur Größe des Luftspalts 12 zwischen Objekt 4 und Lade-/Entladestation 6 oder zur Erfassung der magnetischen Flussdichte in der Lade-/Entladestation 6 umfassen oder Kommunikationsmittel, welche eine Nominal-Lade-/Entladeleistung oder beispielsweise Fahrzeugparameter erfassen.

Der Schutzbereich 18, 20 und der Erfassungsbereich 22, 24 werden vom Steuergerät 26 anhand von den Eingangsinformationssensoren 28 ermittelter Eingangsinformationen eingestellt. Für den Fall, dass beispielsweise die gemessene Lade-/Entladeleistung, Kopplungsgüte oder die magnetische Flussdichte in der Lade-/Entladestation 6 größer als entsprechende definierte Schwellenwerte sind, stellt das Steuergerät 26 das System 2 auf den größeren zweiten Schutzbereich 20 und den größeren zweiten Erfassungsbereich 24 ein. Ebenso stellt für den Fall, dass beispielsweise der gemessene Lateralversatz 14 zwischen Objekt 4 und Lade-/Entladestation 6 oder die gemessene Größe des Luftspalts 12 zwischen Objekt 4 und Lade-/Entladestation 6 kleiner als entsprechende definierte Schwellenwerte sind, das Steuergerät 26 das System 2 auf den größeren zweiten Schutzbereich 20 und den größeren zweiten Erfassungsbereich 24 ein. Für den Fall, dass ermittelt wurde, dass ein kleines Fahrzeug geladen werden soll, stellt das Steuergerät 26 das System 2 auf den kleineren, ersten Schutzbereich 18 und den kleineren, ersten Erfassungsbereich 22 ein, bei einem großen Fahrzeug auf den größeren, zweiten Schutzbereich 20 und den größeren, zweiten Erfassungsbereich 24.

Das Steuergerät 26 ist außerdem mit einer Steuerschaltung 30 der Lade-/Entladestation 6 verbunden, wobei in alternativen Ausführungsformen eine derartige Steuerschaltung 30 auch im Objekt 4 vorhanden sein kann. Das Steuergerät 26 verarbeitet die Informationen des Überwachungssensors 16 und steuert anhand der Messwerte oder Daten des Überwachungssensors 16 die Steuerschaltung 30, so dass bei detektierter Anwesenheit von Metall und/oder Personen im Erfassungsbereich 22, 24 der Überwachungssensoren 16 eine Reaktion in Form einer Abschaltung eines Lade-/Entladevorgangs, einer Unterbrechung des Lade-/Entladevorgangs, einer Reduzierung der Lade-/Entladeleistung eines Lade-/Entladevorgangs, einer Abgabe eines entsprechenden Ausgangssignals, das von weiteren Steuergeräten (nicht dargestellt) weiterverarbeitet werden kann, oder einer Ausgabe eines visuellen oder akustischen Warnsignals erfolgen kann.

Die Erfindung ist nicht auf die hier beschriebenen Ausführungsbeispiele und die darin hervorgehobenen Aspekte beschränkt. Vielmehr sind innerhalb des durch die Ansprüche angegebenen Bereichs eine Vielzahl von Abwandlungen möglich, die im Rahmen fachmännischen Handelns liegen.

## Patentansprüche

1. Verfahren zur Sicherung eines berührungslosen Lade- oder Entladevorgangs eines batteriebetriebenen Objekts (4), insbesondere eines Elektrofahrzeugs, wobei das Laden oder Entladen des batteriebetriebenen Objekts (4) über eine induktive Energieübertragung zwischen einer ersten Spule (8) einer Lade-/Entladestation (6) und einer zweiten Spule (10) des batteriebetriebenen Objekts (4) erfolgt, mit den Schritten:
- Festlegen eines Schutzbereichs (18, 20) in der Umgebung der Lade-/Entladestation (6) anhand von Eingangsinformationen,
- Einstellen eines Erfassungsbereichs (22, 24) von Überwachungssensoren (16) oder eines Auswertebereichs des Erfassungsbereichs (22, 24) von Überwachungssensoren (16) auf den Schutzbereich (18, 20) und
- Überwachen auf Vorhandensein von Metall und/oder Personen im Erfassungsbereich (22, 24) oder Auswertebereich der Überwachungssensoren (16) während eines Lade-/Entladevorgangs des batteriebetriebenen Objekts (4),
**dadurch gekennzeichnet,**
**dass** der Schutzbereich (18, 20) während des Lade-/Entladevorgangs auf Basis einer ermittelten Lade-/Entladeleistung, einer ermittelten Kopplungsgüte der ersten und zweiten Spulen (8, 10), eines ermittelten Abstandes des batteriebetriebenen Objekts (4) zur Lade-/Entladestation (6), insbesondere anhand der Größe eines Lateralversatzes (14) und/oder der Größe eines Luftspaltes (12) zwischen dem batteriebetriebenen Objekt (4) und der Lade-/Entladestation (6), und/oder anhand der Messung einer magnetischen Flussdichte in der Lade-/Entladestation (6) festgelegt wird.

2. Verfahren nach dem vorhergehenden Anspruch, **dadurch gekennzeichnet, dass** der Schutzbereich (18, 20) anhand von Eigenschaften des batteriebetriebenen Objekts (4) festgelegt wird.

3. Verfahren nach einem der vorhergehenden Ansprüche, **dadurch gekennzeichnet, dass** der Schutzbereich (18, 20) in diskreten Schritten einstellbar ist.

4. Verfahren nach einem der vorhergehenden Ansprüche, **dadurch gekennzeichnet, dass** der Erfassungsbereich (22, 24) der Überwachungssensoren (16) durch Einstellen einer Sendeleistung der Überwachungssensoren (16) eingestellt wird.

5. Verfahren nach Anspruch 4, **dadurch gekennzeichnet, dass** als eine weitere Eingangsgröße bei der Einstellung der Sendeleistung der Überwachungssensoren (16) Störeinflüsse berücksichtigt werden.

6. Verfahren nach einem der vorhergehenden Ansprüche, **dadurch gekennzeichnet, dass** bei einer detektierten Anwesenheit von Metall und/oder Personen im Erfassungsbereich (22, 24) oder Auswertebereich der Überwachungssensoren (16) eine Reaktion in Form einer Abschaltung des Lade-/Entladevorgangs, einer zeitweiligen oder bedingten Unterbrechung des Lade-/Entladevorgangs, einer Reduzierung der Lade-/Entladeleistung des Lade-/Entladevorgangs, einer Abgabe eines entsprechenden Ausgangssignals, das von weiteren Steuergeräten weiterverarbeitet werden kann, und/oder einer Ausgabe eines visuellen oder akustischen Warnsignals erfolgt.

7. Computerprogramm zur Durchführung eines der Verfahren nach einem der Ansprüche 1 bis 6, wobei das Computerprogramm auf einer programmierbaren Computereinrichtung ausgeführt wird.

8. System (2) mit einer Lade-/Entladestation (6), einem batteriebetriebenen Objekt (4), insbesondere einem Elektrofahrzeug, wobei die Lade-/Entladestation (6) und das batteriebetriebene Objekt (4) zum Laden und/oder Entladen Spulen (8, 10) aufweisen, Überwachungssensoren (16) zur Erfassung des Vorhandenseins von Metall und/oder Personen in einer Umgebung der Lade-/Entladestation (6) und einem Steuergerät (26), wobei das Steuergerät (26) eingerichtet ist, einen Schutzbereich (18, 20) in der Umgebung der Lade-/Entladestation (6) anhand von Eingangsinformationen festzulegen, einen Erfassungsbereich (22, 24) oder einen Auswertebereich der Überwachungssensoren (16) auf den Schutzbereich (18, 20) einzustellen und während eines Lade-/Entladevorgangs des batteriebetriebenen Objekts (4) ein Vorhandensein von Metall und/oder Personen im Erfassungsbereich (22, 24) oder Auswertebereich der Überwachungssensoren (16) zu überwachen,
**dadurch gekennzeichnet,**
**dass** die Überwachungssensoren (16) Radarsensoren, Infrarotsensoren, ein Videosystem und/oder induktive Metallerkennungssensoren umfassen, bevorzugt Radarsensoren mit einer Frequenzbandbreite von mindestens 500 MHz, bevorzugt mindestens 1 GHz, und mit einem Frequenzbereich von 2 bis 24 GHz, bevorzugt von 3,1 bis 4,8 GHz oder von 6 bis 8,5 GHz, oder mit einem Frequenzbereich von 76 bis 81 GHz.

## Claims

1. Method for protecting a contactless charging/discharging process of a battery-operated object (4), in particular an electric vehicle, wherein the battery-operated object (4) is charged or discharged via inductive energy transmission between a first coil (8) of a charging/discharging station (6) and a second coil (10) of the battery-operated object (4), including the steps:
- defining a protection area (18, 20) in the surroundings of the charging/discharging station (6) on the basis of input information,
- setting a detection range (22, 24) of monitoring sensors (16) or an evaluation range of the detection range (22, 24) of monitoring sensors (16) for the protection area (18, 20) and
- monitoring the presence of metal and/or persons in the detection range (22, 24) or evaluation range of the monitoring sensors (16) during a charging/discharging process of the battery-operated object (4),
**characterized**
**in that** the protection area (18, 20) is defined during the charging/discharging process on the basis of an ascertained charging/discharging performance, and ascertained coupling quality of the first and second coils (8, 10), an ascertained distance of the battery-operated object (4) from the charging/discharging station (6), in particular on the basis of the size of the lateral offset (14) and/or the size of an air gap (12) between the battery-operated object (4) and the charging/discharging station (6), and/or on the basis of the measurement of a magnetic flux density in the charging/discharging station (6).

2. Method according to the preceding claim, **characterized in that** the protection area (18, 20) is defined on the basis of properties of the battery-operated object (4).

3. Method according to one of the preceding claims, **characterized in that** the protection area (18, 20) is settable in discrete steps.

4. Method according to one of the preceding claims, **characterized in that** the detection range (22, 24) of the monitoring sensors (16) is set by adjusting a transmission power of the monitoring sensors (16).

5. Method according to Claim 4, **characterized in that** interferences are taken into account as a further input parameter in the adjustment of the transmission power of the monitoring sensors (16).

6. Method according to one of the preceding claims, **characterized in that**, if the presence of metal and/or persons is detected in the detection range (22, 24) or evaluation range of the monitoring sensors (16), a reaction takes place, in the form of a shutoff of the charging/discharging process, a temporary or conditional interruption of the charging/discharging process, a reduction of the charging/discharging performance of the charging/discharging process, an output of a corresponding output signal which can be further processed by further control units, and/or an output of a visual or acoustic warning signal.

7. Computer program for carrying out one of the methods according to one of the Claims 1 to 6, wherein the computer program is run on a programmable computer device.

8. System (2) comprising a charging/discharging station (6), a battery-operated object (4), in particular an electric vehicle, wherein the charging/discharging station (6) and the battery-operated object (4) comprise coils (8, 10) for charging and/or discharging, monitoring sensors (16) for detecting the presence of metal and/or persons in the surroundings of the charging/discharging station (6), and a control unit (26), wherein the control unit (26) is set up to define a protection area (18, 20) in the surroundings of the charging/discharging station (6) on the basis of input information, to set a detection range (22, 24) or an evaluation range of the monitoring sensors (16) for the protection area (18, 20) and, during a charging/discharging process of the battery-operated object (4), to monitor a presence of metal and/or persons in the detection range (22, 24) or evaluation range of the monitoring sensors (16),
**characterized**
**in that** the monitoring sensors (16) include radar sensors, infrared sensors, a video system and/or inductive metal detection sensors, preferably radar sensors having a frequency bandwidth of at least 500 MHz, preferably at least 1 GHz, and having a frequency range of 2 to 24 GHz, preferably from 3.1 to 4.8 GHz or from 6 to 8.5 GHz, or having a frequency range from 76 to 81 GHz.

## Revendications

1. Procédé destiné à sécuriser un processus de charge ou de décharge sans contact d'un objet fonctionnant sur batterie (4), en particulier d'un véhicule électrique, dans lequel la charge ou la décharge de l'objet fonctionnant sur batterie (4) s'effectue par l'intermédiaire d'une transmission d'énergie par induction entre une première bobine (8) d'une station de charge/décharge (6) et une seconde bobine (10) de l'objet fonctionnant sur batterie (4), comprenant les étapes consistant à :
- définir une zone de protection (18, 20) dans l'environnement de la station de charge/décharge (6) sur la base d'informations d'entrée,
- régler une zone de détection (22, 24) de capteurs de surveillance (16) ou une zone d'évaluation de la zone de détection (22, 24) de capteurs de surveillance (16) sur la zone de protection (18, 20), et
- surveiller la présence de métal et/ou de personnes dans la zone de détection (22, 24) ou la zone d'évaluation des capteurs de surveillance (16) pendant un processus de charge/décharge de l'objet fonctionnant sur batterie (4), **caractérisé en ce que** la zone de protection (18, 20) est définie pendant le processus de charge/décharge sur la base d'une puissance de charge/décharge déterminée, d'une qualité de couplage déterminée des première et seconde bobines (8, 10), d'une distance déterminée de l'objet fonctionnant sur batterie (4) par rapport à la station de charge/décharge (6), en particulier sur la base de la valeur d'un décalage latéral (14) et/ou de la valeur d'un entrefer (12) entre l'objet fonctionnant sur batterie (4) et la station de charge/décharge (6), et/ou sur la base de la mesure d'une densité de flux magnétique dans la station de charge/décharge (6).

2. Procédé selon la revendication précédente, **caractérisé en ce que** la zone de protection (18, 20) est définie sur la base de propriétés de l'objet fonctionnant sur batterie (4).

3. Procédé selon l'une des revendications précédentes, **caractérisé en ce que** la zone de protection (18, 20) peut être réglée par pas discrets.

4. Procédé selon l'une des revendications précédentes, **caractérisé en ce que** la zone de détection (22, 24) des capteurs de surveillance (16) est réglée par réglage d'une puissance d'émission des capteurs de surveillance (16) .

5. Procédé selon la revendication 4, **caractérisé en ce que** des influences parasites sont prises en compte en tant qu'autre grandeur d'entrée lors du réglage de la puissance d'émission des capteurs de surveillance (16).

6. Procédé selon l'une des revendications précédentes, **caractérisé en ce que**, lors de la présence détectée de métal et/ou de personnes dans la zone de détection (22, 24) ou dans la zone d'évaluation des capteurs de surveillance (16), une réaction se produit sous la forme d'une désactivation du processus de charge/décharge, d'une interruption temporaire ou conditionnelle du processus de charge/décharge, d'une réduction de la puissance de charge/décharge du processus de charge/décharge, de l'envoi d'un signal de sortie correspondant qui peut être soumis à des traitements supplémentaires par d'autres appareils de commande et/ou de l'envoi d'un signal d'alerte visuel ou acoustique.

7. Programme d'ordinateur destiné à la mise en oeuvre du procédé selon l'une des revendications 1 à 6, dans lequel le programme d'ordinateur est exécuté sur un dispositif informatique programmable.

8. Système (2) comportant une station de charge/décharge (6), un objet fonctionnant sur batterie (4), en particulier un véhicule électrique, dans lequel la station de charge/décharge (6) et l'objet fonctionnant sur batterie (4) comportent des bobines (8, 10) pour la charge et/ou la décharge, des capteurs de surveillance (16) pour détecter la présence de métal et/ou de personnes dans un environnement de la station de charge/décharge (6) et un appareil de commande (26), dans lequel l'appareil de commande (26) est conçu pour définir une zone de protection (18, 20) dans l'environnement de la station de charge/décharge (6) sur la base d'informations d'entrée, pour régler une zone de détection (22, 24) ou une zone d'évaluation des capteurs de surveillance (16) sur la zone de protection (18, 20) et pour surveiller la présence de métal et/ou de personnes dans la zone de détection (22, 24) ou la zone d'évaluation des capteurs de surveillance (16) pendant un processus de charge/décharge de l'objet fonctionnant sur batterie (4),
**caractérisé en ce que** les capteurs de surveillance (16) comprennent des capteurs radars, des capteurs infrarouges, un système vidéo et/ou des capteurs de détection de métal par induction, de préférence des capteurs radars qui présentent une largeur de bande de fréquences d'au moins 500 MHz et de préférence d'au moins 1 GHz, une plage de fréquences comprise entre 2 et 24 GHz, de préférence entre 3,1 et 4,8 GHz ou entre 6 et 8,5 GHz ou une plage de fréquences comprise entre 76 et 81 GHz.
